# EUROPEAN PATENT APPLICATION

(11) **EP 2 693 656 A1**
(43) Date of publication of application: **05.02.2014**
(21) Application number: 12763321.2
(22) Date of filing: 29.03.2012
(51) Int. Cl.: H04B 7/06, H04W 36/00, H04W 36/30

(54) **RECEIVING DEVICE, RECEIVING METHOD, AND COMPUTER PROGRAM**

(30) Priority: 30.03.2011 JP 2011074508
(71) Applicant: NEC CASIO Mobile Communications, Ltd., Kawasaki-shi Kanagawa 211-8666 (JP); NTT Docomo, Inc., Tokyo 100-6150 (JP)
(72) Inventor: ISHIDA, Kazuhiro, Kawasaki-shi Kanagawa 211-8666 (JP)
(74) Representative: Vossius & Partner
(86) International application number: PCT/JP2012/058457
(87) International publication number: WO 2012/133697

(57) **Abstract**

Provided are a receiving device, a receiving method, and a computer program capable of more reliably ascertaining the number and power of transmitting antennas so as to more accurately find a base station. A first power of a first signal transmitted from a first transmitting antenna and a second power of a second signal transmitted from a second transmitting antenna are measured, and a determination is made as to whether the ratio of the first power and the second power is larger than a predetermined threshold value. When a determination is made that the ratio of the first power and the second power is larger than the threshold value, a presumption is made that the number of transmitting antennas is two.

## Description

### {Technical Field}

The present invention relates to a receiving device, a receiving method, and a computer program.

### {Background Art}

In a wireless communication system such as Long Term Evolution (LTE), which is attracting attention as a next generation communication method, and being standardized by 3rd Generation Partnership Project (3GPP), it is determined on the basis of receiving quality information, such as Signal Received Power reported from a receiver, whether or not to perform a handover process between base stations. For that processing, in order to perform the handover process with an appropriate base station, it is needed to adequately estimate a signal received power.

In a terminal device as a receiver, the power (RSRP) is estimated by using a reference signal sent from a base station. In such an operation, in the case where information data on the base station is not yet obtained, or in the case where the number of antennas is not yet informed from another base station, the number of antennas of the base station still remains unknown.

In LTE; if the number of antennas of a base station is one, a reference signal of R0 only is antenna-transmitted; and meanwhile, if the number of antennas of a base station is two, reference signals of R0 and R1 are antenna-transmitted; and then, if the number of antennas of a base station is four, reference signals of R0, R1, R2, and R3 are individually antenna-transmitted. When the number of antennas is unknown, the power can be estimated at a terminal device by using the R0, which is transmitted in every case in common.

As a conventional approach, there also exists a method of a wireless receiving device in a wireless communication system having a transmission diversity; in which a received information level of each characteristic symbol of each transmission antenna for transmission from a wireless transmission device is measured, the number of transmission antennas is estimated on the basis of the received information level, demodulation with respect to the estimated number of transmission antennas is preferentially carried out, and then a Cyclic Redundancy Check (CRC) is performed by using a CRC mask pattern in order to detect the number of transmission antennas (for example, refer to PTL 1).

### {Citation List}

### {Patent Literature}

{PTL1} JP 2010-166348 A

### {Summary of Invention}

### {Technical Problem}

Unfortunately, in such a method of estimating the power by using a reference signal R0, a base station cannot be found at a terminal device in the case where the reference signal R0 is not transmitted at the base station having two or four transmission antennas because of a malfunction of an antenna, and the like.

Thus, it is an objective of the present invention to provide a receiving device, a receiving method and a computer program that give a solution to the issue described above; and, in other words, which are able to notice the number of transmission antennas and the power more definitely, in order to find a base station more certainly.

### {Solution to Problem}

In order to give a solution to the issue described above; according to a first aspect of the present invention, provided is a receiving device including: a measuring means for measuring a first power of a first signal transmitted from a first transmission antenna, and a second power of a second signal transmitted from a second transmission antenna; a judgment means for judging whether or not a ratio between the first power and the second power is greater than a predetermined threshold value; and an estimation means for estimating that the number of transmission antennas is two, in the case where it is judged that the ratio between the first power and the second power is greater than the predetermined threshold value.

According to a second aspect of the present invention, provided is a receiving method including: a measuring step for measuring a first power of a first signal transmitted from a first transmission antenna, and a second power of a second signal transmitted from a second transmission antenna; a judgment step for judging whether or not a ratio between the first power and the second power is greater than a predetermined threshold value; and an estimation step for estimating that the number of transmission antennas is two, in the case where it is judged that the ratio between the first power and the second power is greater than the predetermined threshold value.

According to a third aspect of the present invention, provided is a computer program to operate a computer for an operation including: a measuring step for measuring a first power of a first signal transmitted from a first transmission antenna, and a second power of a second signal transmitted from a second transmission antenna; a judgment step for judging whether or not a ratio between the first power and the second power is greater than a predetermined threshold value; and an estimation step for estimating that the number of transmission antennas is two, in the case where it is judged that the ratio between the first power and the second power is greater than the predetermined threshold value.

### {Advantageous Effects of Invention}

According to the present invention, it becomes possible to provide a receiving device, a receiving method and a computer program that are able to notice the number of transmission antennas and the power more definitely, in order to find a base station more certainly.

### {Brief Description of Drawings}

FIG. 1 is a block diagram showing a configuration of a receiver according to LTE.
FIG. 2 is a block diagram showing a configuration of a power measuring unit 14.
FIG. 3 is a flowchart for explaining a process of power measurement.
FIG. 4 is a block diagram showing a configuration example of computer hardware.

### {Description of Embodiments}

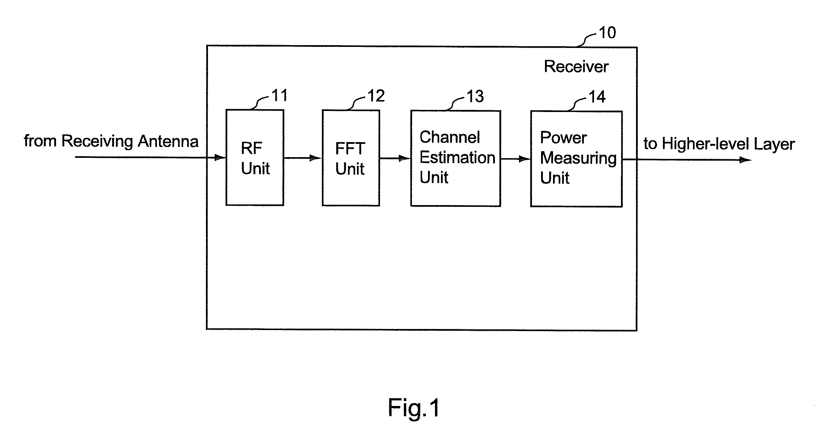

A receiving device according to an embodiment of the present invention is explained below with reference to FIG. 1 through FIG. 4.

FIG. 1 is a block diagram showing a configuration of a receiver according to LTE. Being an example of a receiving device, a receiver 10 includes a Radio Frequency (RF) unit 11, a Fast Fourier Transform (FFT) unit 12, a channel estimation unit 13, and a power measuring unit 14.

In the receiver 10, the RF unit 11 A/D-converts (A/D stands for Analog /Digital) a signal received by a receiving antenna, which is not shown, from an analog signal to a digital signal. The FFT unit 12 transforms the digital signal into a datum of frequency components by way of a Fourier Transform. The channel estimation unit 13 estimates a channel estimation matrix that shows channel status, by using a known signal (Reference Signal) mapped beforehand in a frequency resource, out of the datum of frequency components. The power measuring unit 14 measures the power on the basis of the channel estimation matrix.

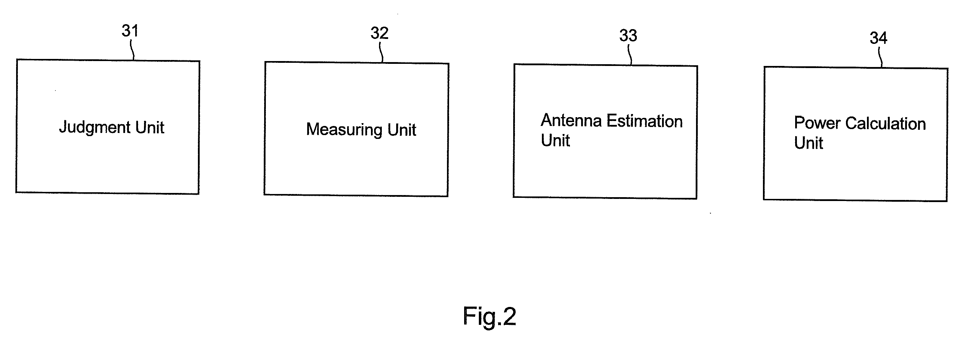

FIG. 2 is a block diagram showing a configuration of the power measuring unit 14. The power measuring unit 14 includes a judgment unit 31, a measuring unit 32, an antenna estimation unit 33, and a power calculation unit 34.

The judgment unit 31 makes a judgment on whether or not a ratio between the power of a reference signal R0 and the power of a signal R1 is greater than a predetermined threshold value. The measuring unit 32 measures the power of the reference signal R0 and the power of a reference signal R1. If it is judged that the ratio between the power of the reference signal R0 and the power of the signal R1 is greater than the threshold value, the antenna estimation unit 33 estimates that the number of transmission antennas is two.

The power calculation unit 34 calculates a received power in such a way that; if it is estimated that the number of transmission antennas is two, an average of the power of the reference signal R0 and the power of the signal R1 gives a received power; and meanwhile if it is not estimated that the number of transmission antennas is two, the power of the reference signal R0 becomes a received power.

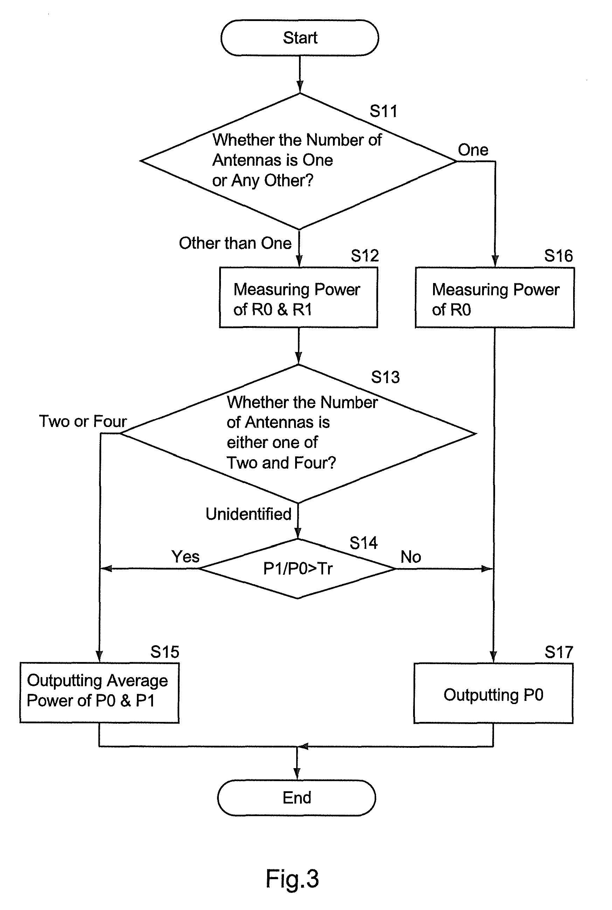

FIG. 3 is a flowchart for explaining a process of power measurement.

At Step S11, the judgment unit 31 makes a judgment on whether the number of antennas at the base station is one or any other number, on the basis of the channel estimation matrix of the reference signal. If it is judged at Step S11 that the number of antennas at the base station is any number other than one; namely, the number of antennas at the base station is two or four, or unidentified; operation progresses to Step S12 so that the measuring unit 32 measures a power P0 of the reference signal R0, and a power P1 of the reference signal R1, on the basis of the channel estimation matrix of the reference signal R0, and the channel estimation matrix of the reference signal R1, respectively.

At Step S 13, the judgment unit 31 makes a judgment on whether or not the number of antennas at the base station is either number of two and four, on the basis of the channel estimation matrix of the reference signal. If it is judged at Step S13 that the number of antennas at the base station is neither two nor four but the number of antennas at the base station is unidentified, operation progresses to Step S 14. Then, at Step S 14, the judgment unit 31 judges whether or not a quotient of 'the power P1 / the power P0' is greater than a threshold value Tr, wherein the threshold value Tr is a predetermined threshold value. In other words, the judgment unit 31 judges whether a ratio between the power P1 and the power P0 is greater than the predetermined threshold value Tr.

If it is judged at Step S 14 that the quotient of 'the power P1 / the power P0' is greater than the threshold value Tr, the antenna estimation unit 33 judges that the number of antennas is two or more (i.e., the antenna estimation unit 33 estimates that the number of transmission antennas is two) so that operation progresses to Step S15. At Step S 15, the power calculation unit 34 calculates a power P = (the power P0 + the power P1) / 2, and outputs the power P obtained as a result of the calculation as a received power, and then the operation of the power measurement finishes.

In other words, the antenna estimation unit 33 estimates that the number of antennas is two, in the case where the ratio between the power P1 and the power P0 is judged to be greater than the predetermined threshold value Tr.

If it is judged at Step S13 that the number of antennas at the base station is either number of two and four, operation progresses to Step S15 to calculate the power P = (the power P0 + the power P1) / 2, as described above, and outputs the power P obtained as a result of the calculation as a received power, and then the operation of the power measurement finishes.

If it is judged at Step S11 that the number of antennas at the base station is one, operation progresses to Step S16. Then, at Step S16, the measuring unit 32 measures a power P0 of the reference signal R0, on the basis of the channel estimation matrix of the reference signal R0, obtained by the channel estimation unit 13. After Step S16, operation progresses to Step S 17 so that the power calculation unit 34 defines a power P with the power P0, and notifies of the power P obtained as a result of the calculation, as a received power (i.e., to output it as a received power), and then the operation of the power measurement finishes.

If it is judged at Step S14 that the quotient of 'the power P1 / the power P0' is not greater than the threshold value Tr, operation progresses to Step S 17 to define a power P with the power P0, and notifies of the power P, as a received power, and then the operation of the power measurement finishes.

In this way, even though there is no power in relation to a transmission antenna 0 of the base station (the reference signal R0), an average power of the base station can appropriately be measured to find the base station, when the number of antennas at the base station is unknown for the receiver 10. Moreover, receiving information data by using the measured result makes it possible to reduce the number of candidate data for demodulating & decoding the information data so that the amount of processing operations and the power consumption can be reduced.

As described above, in the case where the number of transmission antennas at the base station is unknown for the receiver 10, each power of the reference signal R0 and the reference signal R1 is measured; and then if the power of the reference signal R1 is sufficiently greater than the power of the reference signal R0, the number of antennas at the base station is judged (estimated) to be two or more; and in any other case, the number of antennas at the base station is judged (estimated) to be one. Thus, even when the power of the reference signal R0 is small, the number of antennas at the base station is judged (estimated) to be two, if the power of the reference signal R1 is great; so that the power can be estimated with an average of power data of the two antennas, and therefore the power of the base station having two transmission antennas can be estimated (calculated).

The series of processes described above may be executed by means of hardware, and may also be executed by way of software. For executing the series of processes by way of software, a computer program constituting the software is installed into a computer, which is built in exclusive-use hardware, from a recording medium; or the software is installed from a recording medium, for example, into a general-purpose personal computer that can execute various functions with various computer programs being installed.

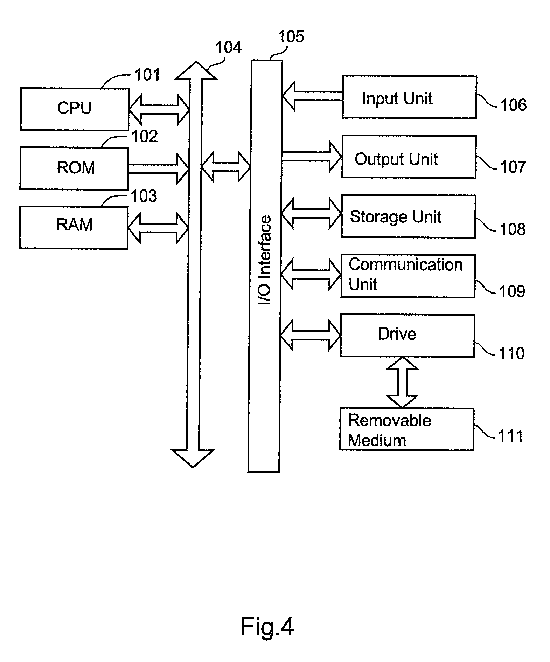

FIG. 4 is a block diagram showing a configuration example of hardware of a computer that executes the series of processes described above by way of a computer program.

In the computer; a central processing unit (CPU) 101, a read only memory (ROM) 102, and a random access memory (RAM) 103 are interconnected by using a bus 104.

Moreover, an I/O interface 105 is connected to the bus 104. Connected to the I/O interface 105 are; an input unit 106 including a keyboard, a mouse, a microphone, and the like; an output unit 107 including a display, a speaker, and the like; a storage unit 108 including a hard disc, a non-volatile memory, and the like; a communication unit 109 including a network interface and the like; and a drive 110 for driving a removable medium 111 such as a magnetic disc, an optical disc, a magnetic optical disc, or a semiconductor memory.

In the computer configured as described above, the CPU 101 loads a computer program, for example, stored in the storage unit 108, to the RAM 103 by way of the I/O interface 105 and the bus 104, and executes the program in order to carry out the series of processes described above.

The computer program to be executed by the computer (the CPU 101) is recorded, for being provided, in the removable medium 111 as a package medium; such as, for example, a magnetic disc (including a flexible disc), an optical disc (Compact Disc - Read Only Memory (CD-ROM), Digital Versatile Disc (DVD), and the like), a magnetic optical disc, or a semiconductor memory; or the computer program is provided via a wired or wireless transmission medium such as a local area network, the Internet, or digital satellite broadcasting.

Then, the computer program can be installed in the computer by way of being stored in the storage unit 108 through the I/O interface 105, while the removable medium 111 being mounted on the drive 110. Alternatively, the computer program can be installed in the computer by way of being stored in the storage unit 108, while being received in the communication unit 109 by the intermediary of a wired or wireless transmission medium. In another way, the computer program can previously be installed in the computer by way of storing the program in advance in the ROM 102 or the storage unit 108.

Incidentally, the computer program to be executed by the computer may be a program with which processes are carried out in chronological order along the sequence explained in this specification document, or may be a program with which processes are carried out in parallel or at the time as required, such as, in response to a call.

Furthermore, an embodiment of the present invention is not limited only to the embodiment described above, and various other variations may be made without departing from the concept of the present invention.

### {Reference Signs List}

10. receiver, 11. RF unit, 12. FFT unit, 13. channel estimation unit, 14. power measuring unit, 31. judgment unit, 32. measuring unit, 33. antenna estimation unit, 34. power calculation unit, 101. CPU, 102. ROM, 103. RAM, 108. storage unit, 109. communication unit, 111. removable medium

## Claims

1. A receiving device comprising:
a measuring means for measuring a first power of a first signal transmitted from a first transmission antenna, and a second power of a second signal transmitted from a second transmission antenna;
a judgment means for judging whether or not a ratio between the first power and the second power is greater than a predetermined threshold value; and
an estimation means for estimating that the number of transmission antennas is two, in the case where it is judged that the ratio between the first power and the second power is greater than the predetermined threshold value.

2. The receiving device according to claim 1:
wherein, the measuring means measures a power of a reference signal R0 as the first power and a power of a reference signal R1 as the second power.

3. The receiving device according to either of claim 1 or claim 3, further comprising:
a calculation means for calculating a received power in such a way that; if it is estimated that the number of transmission antennas is two, an average of the first power and the second power gives a received power; and meanwhile if it is not estimated that the number of transmission antennas is two, the power of the first power becomes a received power.

4. A receiving method comprising:
a measuring step for measuring a first power of a first signal transmitted from a first transmission antenna, and a second power of a second signal transmitted from a second transmission antenna;
a judgment step for judging whether or not a ratio between the first power and the second power is greater than a predetermined threshold value; and
an estimation step for estimating that the number of transmission antennas is two, in the case where it is judged that the ratio between the first power and the second power is greater than the predetermined threshold value.

5. A computer program to operate a computer for an operation comprising:
a measuring step for measuring a first power of a first signal transmitted from a first transmission antenna, and a second power of a second signal transmitted from a second transmission antenna;
a judgment step for judging whether or not a ratio between the first power and the second power is greater than a predetermined threshold value; and
an estimation step for estimating that the number of transmission antennas is two, in the case where it is judged that the ratio between the first power and the second power is greater than the predetermined threshold value.
